# EUROPÄISCHE PATENTSCHRIFT

(11) **EP 3 628 917 B1**
(45) Veröffentlichungstag und Bekanntmachung des Hinweises auf die Patenterteilung: **04.01.2023**
(21) Anmeldenummer: 19195012.0
(22) Anmeldetag: 03.09.2019
(51) Int. Cl.: F21S 45/435, F21S 45/49, B60Q 1/00

(54) **KRAFTFAHRZEUGSCHEINWERFER MIT LÜFTER**
MOTOR VEHICLE HEADLAMP WITH FAN
PHARE DE VÉHICULE AUTOMOBILE POURVU D'AÉRATEUR

(30) Priorität: 28.09.2018 DE 102018124098
(43) Veröffentlichungstag der Anmeldung: 01.04.2020
(73) Patentinhaber: Automotive Lighting Reutlingen GmbH, 72762 Reutlingen (DE)
(72) Erfinder: Otto, Carsten, 73734 Esslingen (DE); Müller, Marcus, 72800 Eningen (DE); Hahn, Christoph, 72766 Reutlingen (DE); Gottwalles, Hubert Nicolas, 72770 Reutlingen (DE)
(74) Vertreter: DREISS Patentanwälte PartG mbB

(56) Entgegenhaltungen:
- DE-A1- 19 712 228
- DE-A1-102012 111 638
- DE-U1-202009 015 068
- JP-A- 2004 253 325
- JP-A- 2010 262 903
- KR-A- 20140 029 022
- US-A1- 2009 154 189
- US-A1- 2011 051 453

## Beschreibung

Die Erfindung betrifft einen Kraftfahrzeugscheinwerfer mit einem Gehäuse und einer Gehäuseöffnung nach dem Oberbegriff des Anspruchs 1. Ein solcher Kraftfahrzeugscheinwerfer ist aus der JP 2004253325 A1 bekannt. Scheinwerfer mit Lüftern sind auch aus der US 2009/0154189 dadurch gekennzeichnet, dass A1 und der DE 102 012 111 638 A1 bekannt.

Kraftfahrzeugscheinwerfer werden derzeit in zunehmendem Umfang mit Halbleiterlichtquellen bestückt. Im Gegensatz zu Halogenlampen oder Gasentladungslampen geben Halbleiterlichtquellen kaltes Licht ab. Die Strahlung selbst enthält also keine Wärmestrahlungsanteile, die mit den entsprechenden Anteilen einer Halogenlampe oder Gasentladungslampe vergleichbar wären. Trotzdem treten auch beim Betrieb von Halbleiterlichtquellen Verluste von ca. 80% auf. Das heißt, dass ca. 80% der zum Betrieb eingesetzten elektrischen Energie als Verlustwärme frei werden und die Halbleiterlichtquellen aufheizen können. Dies ist problematisch, weil wichtige Eigenschaften von Halbleiterlichtquellen, wie deren Lichtstrom, Farbe, Vorwärtsspannung und Lebensdauer stark temperaturabhängig sind. Die Temperatur der Halbleiterlichtquellen muss daher innerhalb enger, fest vorgeschriebener Grenzen um einen vorbestimmten thermischen Arbeitspunkt liegen. Dabei sollten die Halbleiterlichtquellen insbesondere vor einer Überhitzung geschützt werden. Hierzu ist es bekannt, elektrisch betriebene Lüfter in Kraftfahrzeugscheinwerfern vorzusehen, um einen kühlenden Luftstrom zu erzeugen. Derartige Lüfter zur Erzeugung eines Kühlluftstroms werden heute üblicherweise ungedämpft entweder direkt oder unter Zuhilfenahme von Zusatzteilen lösbar oder unlösbar in Kraftfahrzeugscheinwerfern befestigt. Zur Befestigung werden insbesondere Befestigungsmittel, wie Clips, Haken, Schrauben und/oder weitere Zusatzteile verwendet. Dabei hat es sich herausgestellt, dass die bekannten Befestigungsweisen zu einer störenden Geräuschentwicklung führen können, indem eine störende Schallübertragung, insbesondere eine Luft- und/oder Körperschallübertragung, in das Fahrzeuginnere auftreten kann. Ferner hat es sich herausgestellt, dass durch die auftretenden mechanischen Schwingungen zwischen Lüfter und Gehäuse die so erzeugten mechanischen Belastungen zu einer mechanischen Beschädigung in Form von Abrieb und/oder erhöhtem mechanischem Spiel führen können.

Der vorliegenden Erfindung liegt die Aufgabe zu Grunde, den genannten Nachteilen des Standes der Technik Abhilfe zu schaffen.

Diese Aufgabe wird durch einen Kraftfahrzeugscheinwerfer mit den Merkmalen des Anspruchs 1 gelöst.

Dadurch, dass die Übertragung mechanischer Schwingungen gedämpft wird, kann eine mechanische Schwingungen übertragende Kopplung zwischen Haltekappe und Gehäuse reduziert werden. Dabei kann insbesondere vermieden werden, dass Schwingungen des Lüfters derart auf das Gehäuse übertragen werden, dass dieses zu Schwingungen angeregt wird. Dadurch kann eine Reduzierung der Geräuschübertragung vom Lüfter auf das Gehäuse erzielt werden. Insgesamt kann insbesondere die Schallübertragung in das Fahrzeuginnere und/oder die Fahrzeugumgebung reduziert werden.

Dabei weisen die Haltekappe und ein Befestigungsabschnitt des Gehäuses, an dem die Haltekappe befestigt ist, eine Materialzusammensetzung derart auf, dass eine Übertragung mechanischer Schwingungen zwischen Lüfter und Gehäuse gedämpft wird. Zusätzlich sind die Haltekappe und ein Befestigungsabschnitt des Gehäuses, an dem die Haltekappe befestigt ist, durch ihre strukturelle Ausbildung, insbesondere die geometrische Ausbildung, so eingerichtet, dass eine Übertragung mechanischer Schwingungen zwischen Lüfter und Gehäuse gedämpft wird.

Dabei ist insbesondere denkbar, dass die Haltekappe unmittelbar am Gehäuse angeordnet ist und somit die Haltekappe an das Gehäuse unmittelbar angrenzt. Die Haltekappe kann insbesondere lösbar am Gehäuse angeordnet sein. Dabei ist die Haltekappe an einem Befestigungsabschnitt des Gehäuses angeordnet.

Weiterhin kann die Haltekappe insbesondere auch eine Schutzfunktion aufweisen, um den Lüfter und das Innere des Gehäuses vor Verunreinigungen zu schützen. Hierzu kann die Haltekappe die Öffnung vollständig oder im Wesentlichen vollständig abdecken.

Eine vorteilhafte Weiterbildung der Erfindung sieht vor, dass die Haltekappe und ein Befestigungsabschnitt des Gehäuses, an dem die Haltekappe befestigt ist, jedenfalls abschnittsweise Materialien unterschiedlicher Steifigkeit aufweisen. Es hat sich herausgestellt, dass durch eine derart unterschiedliche Materialauswahl eine besonders vorteilhafte Schwingungsdämpfung erzielt werden kann.

Eine weitere vorteilhafte Ausgestaltung der Erfindung sieht vor, dass die Haltekappe wenigstens abschnittsweise eine geringere Steifigkeit als ein Befestigungsabschnitt des Gehäuses, an dem die Haltekappe befestigt ist, aufweist. Eine derart gewählte geringere Steifigkeit hat sich insbesondere hinsichtlich der Reduktion der von der Haltekappe auf das Gehäuse übertragenen Schwingungsamplitude als vorteilhaft herausgestellt. Durch die geringere Steifigkeit ist die Haltekappe nachgiebiger als das Gehäuse. Dadurch kann sich die Haltekappe bei auftretenden Schwingungen im Lüfter elastisch verformen und dabei mechanische Schwingungen in insbesondere Wärmeenergie umwandeln. Selbstverständlich ist auch denkbar, dass das Material der Haltekappe jedenfalls abschnittsweise eine geringere Härte als das Material des Begrenzungsabschnitts aufweist.

Vorteilhaft ist auch, wenn die Haltekappe einen Übergangsabschnitt zwischen den Flanschabschnitten und dem Halteabschnitt umfasst. Insbesondere der Übergangsabschnitt kann dazu eingerichtet sein, mit Schwingungsbewegungen des Halteabschnitts, insbesondere aufgrund des Betriebs des Lüfters, mitzuschwingen und andererseits derartige Schwingungsbewegungen nicht oder nur mit gegenüber den Schwingungsamplituden des Halteabschnitts verringerter Schwingungsamplitude auf den Flanschabschnitt zu übertragen.

Besonders bevorzugt ist, wenn der Übergangsabschnitt und der Halteabschnitt und/oder der Übergangsabschnitt und der Flanschabschnitt wenigstens abschnittsweise eine unterschiedliche Steifigkeit aufweisen. Insbesondere kann der Übergangsabschnitt eine geringere Steifigkeit als der Halteabschnitt und der Flanschabschnitt aufweisen. Der Flanschabschnitt kann beispielsweise an das Gehäuse, insbesondere unmittelbar, angeschraubt sein. Erfindungsgemäß weist der Lüfter einen Lüfterrahmen auf, wobei der Lüfterrahmen mit Befestigungsmitteln am Halteabschnitt insbesondere so befestigt ist, dass der Lüfter vom Halteabschnitt beabstandet ist. Mechanische Schwingungen des Lüfters können folglich über den Lüfterrahmen und die Befestigungsmittel auf den Halteabschnitt übertragen werden und von dort aus über den Übergangsabschnitt und den Flanschabschnitt auf das Gehäuse des Kraftfahrzeugscheinwerfers. Dabei können in dieser Schwingungsübertragungskette, insbesondere aneinander angrenzende unterschiedliche Komponenten unterschiedliche Werkstoffe aufweisen oder umfassen, wobei diese derart unterschiedlich ausgebildeten Werkstoffe insbesondere unterschiedliche Steifigkeiten aufweisen können. Dadurch können Schwingungen absorbiert werden und insgesamt eine Dämpfung, insbesondere der im Lüfter erzeugten mechanischen Schwingungen, erreicht werden.

Besonders bevorzugt ist weiter, wenn der Übergangsabschnitt zylindrisch ausgebildet ist, wobei der Halteabschnitt an einem der Öffnung abgewandten Ende des Übergangsabschnitts angeordnet ist. Der Übergangsabschnitt kann also insbesondere kreiszylindrisch und weiter insbesondere als Kreisring ausgebildet sein. Der Lüfter kann also insbesondere durch den Übergangsabschnitt hindurchgeführt sein und weiter durch die Öffnung in das Innere des Gehäuses. Dabei kann die Öffnung insbesondere ebenfalls zylindrisch ausgebildet sein, so dass der Übergangsabschnitt im Wesentlichen formschlüssig in der Öffnung angeordnet sein kann.

In diesem Zusammenhang ist insbesondere denkbar, dass der Übergangsabschnitt dicht an der Gehäuseöffnung anliegt.

Folglich kann der Übergangsabschnitt auch eine Dichtfunktion bereitstellen, um das Innere des Gehäuses des Kraftfahrzeugscheinwerfers gegen ein Eindringen von Verunreinigungen und/oder Feuchtigkeit abzudichten.

Dabei kann der Halteabschnitt als durchgehende Halteplatte ausgebildet sein, sodass der Übergangsabschnitt zusammen mit der Halteplatte das Innere des Gehäuses des Kraftfahrzeugscheinwerfers gegen ein Eindringen von Verunreinigungen und/oder Feuchtigkeitseindrang abdichten kann.

Die Haltekappe kann jedenfalls abschnittsweise aus einem formfesten aber elastischen Material bestehen. Insbesondere kann das elastische Material als ein Elastomer ausgebildet sein. Beispielsweise kann es sich um ein thermoplastisches Elastomer (TPE), ein Ethylen-Propylen-Dien-Kautschuk (EPDM), oder um ein Silikonelastomer handeln. Dadurch kann eine besonders vorteilhafte Schwingungsdämpfung auf vergleichsweise einfache Art und Weise bereitgestellt werden.

Denkbar ist insbesondere, dass die Befestigungsmittel aus dem formfesten, elastischen Material bestehen bzw. ein solches Material umfassen. Denkbar wäre zusätzlich oder alternativ auch, dass der Übergangsabschnitt und/oder der Halteabschnitt und/oder der Flanschabschnitt aus dem elastischen Material bestehen. Denkbar wäre auch, dass die gesamte Haltekappe aus dem formfesten, elastischen Material besteht.

Vorzugsweise ist der Flanschabschnitt an einem der Öffnung abgewandten Endbereich des Übergangsabschnitts vorgesehen. Der Flanschabschnitt kann dabei insbesondere einstückig mit dem Übergangsabschnitt ausgebildet sein. Insbesondere können der Flanschabschnitt und der Halteabschnitt an dem der Öffnung abgewandten Endbereich des Übergangsabschnitts vorgesehen sein. Eine derartige Anordnung hat sich ebenfalls hinsichtlich der Schwingungsdämpfung als besonders vorteilhaft erwiesen.

Eine weitere bevorzugte Ausgestaltung der Erfindung ergibt sich daraus, dass die Gehäuseöffnung auf einer einer Lichtaustrittsöffnung des Gehäuses abgewandten Rückseite des Gehäuses vorgesehen ist. Denkbar wäre auch eine seitliche Anordnung. Eine Anordnung auf der Rückseite ermöglicht allerdings eine besonders einfache Wartung des Lüfters.

Weitere Einzelheiten und vorteilhafte Ausgestaltungen der Erfindung sind der folgenden Beschreibung zu entnehmen, anhand derer die in den Figuren dargestellte Ausführungsform der Erfindung näher beschrieben und erläutert ist. Es zeigen:
Figur 1 eine schematische Darstellung eines Kraftfahrzeugscheinwerfers gemäß einer Ausführungsform;
Figur 2 eine perspektivische Ansicht einer schematischen Darstellung eines Lüfters für den Kraftfahrzeugscheinwerfer nach Figur 1; und
Figur 3 eine Draufsicht auf die Darstellung nach Figur 2; und
Figur 4 eine Seitenansicht der Darstellung nach Figur 2.

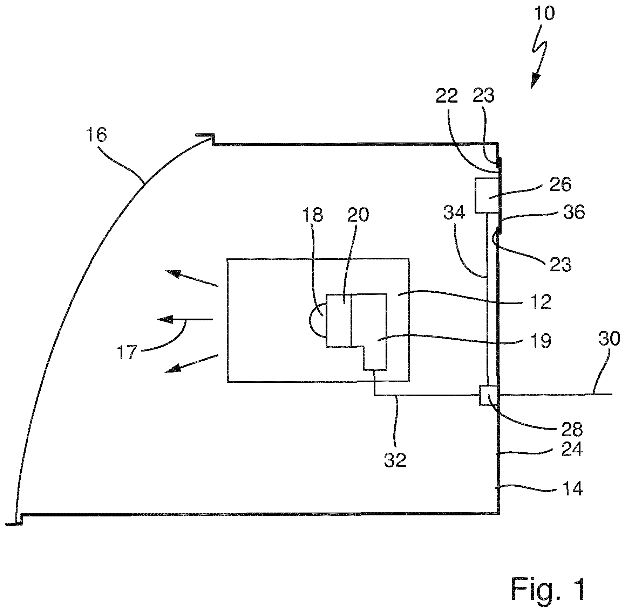

Figur 1 zeigt eine schematische Darstellung eines erfindungsgemäßen Scheinwerfers 10 eines Kraftfahrzeugs mit einem Lichtmodul 12. Der Scheinwerfer 10 umfasst ein Gehäuse 14 mit einer durch eine Abdeckscheibe 16 verschlossenen Lichtaustrittsöffnung. Das Gehäuse 14 ist vorzugsweise aus Kunststoff gefertigt. Die Abdeckscheibe 16 besteht vorzugsweise aus einem transparenten Kunststoff oder Glas. Die Abdeckscheibe 16 kann als eine Streuscheibe zumindest teilweise mit optisch wirksamen Streuelementen (z.B. Prismen oder Zylinderlinsen) oder als eine klare Scheibe ohne solche Streuelemente ausgebildet sein.

Das Lichtmodul 12 ist in dem Gehäuse 14 angeordnet und dient zur Erzeugung einer vorgegebenen Lichtverteilung, beispielsweise einer Abblendlicht- oder Fernlichtverteilung oder einer beliebig anderen Lichtverteilung, bspw. einer adaptiven Lichtverteilung, vor dem Fahrzeug. Die Lichtverteilung ist durch Pfeile 17 symbolisiert. Das Lichtmodul 12 kann als ein Reflexionsmodul oder als ein Projektionsmodul ausgebildet sein. In dem Gehäuse 14 könnten auch noch weitere Lichtmodule zur Realisierung anderer Lichtfunktionen und/oder Leuchtenmodule zur Realisierung einer beliebigen Leuchtenfunktion, wie beispielsweise eines Blinklichts, eines Positionslichts und/oder eines Tagfahrlichts, angeordnet sein.

Das Lichtmodul 12 weist mindestens eine Lichtquelle 18 zum Aussenden des Lichts zur Erzeugung der Lichtverteilung 17 auf, die in dem dargestellten Beispiel als eine Halbleiterlichtquelle, vorzugsweise als eine Leuchtdiode (LED), ausgebildet ist. Die Lichtquelle 18 könnte jedoch auch als eine Gasentladungslampe oder eine beliebig andere Lichtquelle ausgebildet sein. Zur Erzeugung der gewünschten Lichtverteilung 17 weist das Lichtmodul 12 üblicherweise eine Primäroptik, zum Beispiel in Form eines Reflektors und/oder einer TIR (Total Internal Reflection)-Vorsatzoptik, zum Bündeln des von der Halbleiterlichtquelle 18 ausgesandten Lichts auf (nicht dargestellt). Außerdem kann das Lichtmodul 12 auch eine Sekundäroptik (nicht dargestellt), zum Beispiel in Form einer Sammellinse, im Strahlengang des ausgesandten Lichts aufweisen, welche das gebündelte Licht zur Erzeugung der Lichtverteilung 17 auf die Fahrbahn vor das Fahrzeug projiziert. Falls die Lichtverteilung 17 eine abgeblendete Lichtverteilung (z.B. Abblendlicht, Nebellicht, etc.) ist, kann in dem Lichtmodul 12 zwischen der Primäroptik und der Sekundäroptik noch eine Blendenanordnung vorgesehen sein, deren Oberkante (bei vertikaler Blendenanordnung) bzw. Vorderkante (bei horizontaler Blendenanordnung) als Hell-Dunkel-Grenze auf die Fahrbahn vor das Fahrzeug projiziert wird.

Das Lichtmodul 12 umfasst auch ein Trägerelement 20, auf dem die LED 18 angeordnet ist. Das Trägerelement 20 ist bspw. als eine Leiterplatte (PCB - Printed Circuit Board) ausgebildet. Die LED 18 ist auf dem Trägerelement 20 befestigt und über darauf ausgebildete Leiterbahnen kontaktiert. Es können auch mehrere LEDs 18 auf dem Trägerelement 20 angeordnet sein. Auch mehrere Trägerelemente 20 mit jeweils mindestens einer LED 18 können in dem Lichtmodul 12 vorgesehen sein. Das Trägerelement 20 ist zur besseren Wärmeabfuhr auf einem Kühlkörper 19 angeordnet. Dieser kann insbesondere nicht dargestellte oberflächenvergrößernde Elemente, beispielsweise in Form von Kühlrippen oder Kühlstiften, umfassen.

Weiterhin umfasst das Gehäuse 14 eine Öffnung 22, beispielsweise an seiner Rückseite 24, wobei die Öffnung 22 von einem Befestigungsabschnitt 23 des Gehäuses 14 umgeben ist. Durch die Öffnung 22 ist ein elektrisch angetriebener Lüfter 26 in das Innere des Gehäuses 14 geführt. Weiterhin ist im Gehäuse 14 ein Stromteiler 28 vorgesehen, der über eine zentrale Stromzufuhr 30 mit elektrischer Energie versorgt wird. Der Stromteiler versorgt zum einen das Lichtmodul 12 mit elektrischer Energie über eine Stromzufuhr 32. Über eine Stromzufuhr 34, die durch die Innenseite des Gehäuses 14 geführt ist, wird zum anderen der Lüfter 26 ebenfalls mit elektrischer Energie versorgt.

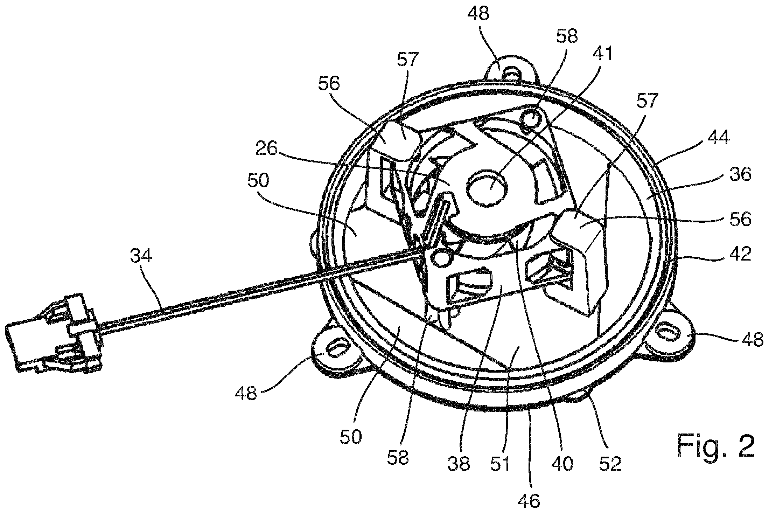

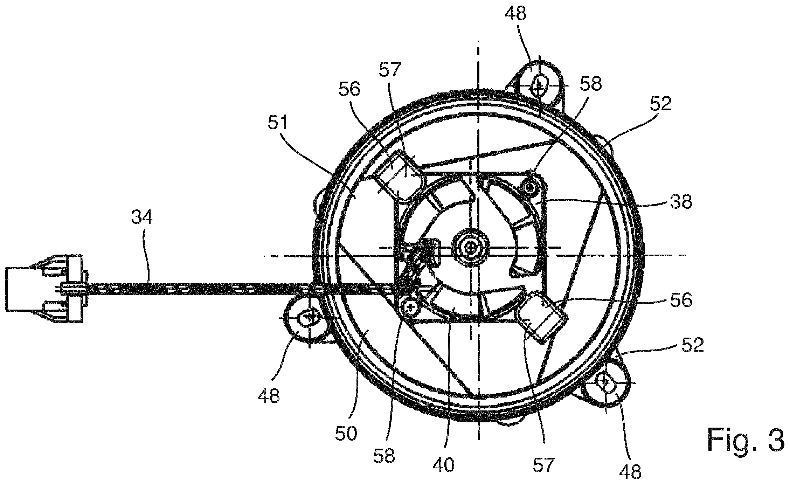

Der Lüfter 26 ist an einer Haltekappe 36 befestigt. Der detaillierte Aufbau dieser Anordnung wird im Folgenden anhand der Figuren 2 bis 4 im Detail erläutert. Der Lüfter 26 umfasst zunächst einen im Wesentlichen rechteckigen Lüfterrahmen 38. Im Lüfterrahmen 38 ist zur Erzeugung eines Luftstroms ein Rotor 40 vorgesehen, der im Betrieb Luft im Inneren des Gehäuses 14 umwälzt und von einem nicht gezeigten elektrischen Motor antreibbar ist.

Die Haltekappe 36 umfasst zunächst einen kreiszylindrischen Übergangsabschnitt 42, der rohrförmig ausgebildet ist. Dieser liegt dicht an der Gehäuseöffnung 22 an, um insbesondere ein Eindringen von Verunreinigungen und/oder Feuchtigkeit zu verhindern. Dabei weist der Übergangsabschnitt 42 ein umlaufendes, im angeordneten Zustand dem Gehäuse 14 zugewandtes Ende 44 und ein umlaufendes, im angeordneten Zustand dem Gehäuse 14 abgewandtes Ende 46 auf. Im abgewandten Endbereich sind erfindungsgemäß drei zueinander versetzte Flanschabschnitte 48 vorgesehen. Diese ragen in radialer Richtung vom Übergangsabschnitt 42 ab und weisen eine Öffnung auf, um die Haltekappe 36 zusammen mit dem Lüfter 26, beispielsweise mittels einer Schraubverbindung, am Befestigungsabschnitt 23 des Gehäuses 14 zu befestigen. Auf der dem Gehäuse 14 abgewandten Seite 14 ist erfindungsgemäß ferner ein durchgehender plattenförmiger Halteabschnitt 50 befestigt, der die Haltekappe 36 nach außen verschließt. Dieser verhindert zudem zusammen mit dem Übergangsabschnitt 42 ein Eindringen von Verunreinigungen und/oder Feuchtigkeit in das Innere des Gehäuses 14. An der Außenseite des Halteabschnitts 50 ist ein Warnhinweis 51 angeordnet, um vor möglicher Strahlung im Inneren des Gehäuses 14 zu warnen. Der Halterahmen 38 und damit der Lüfter 26 als solches ist vom Halteabschnitt 50 beabstandet angeordnet. Hierzu weist die Haltekappe 36 zwei diagonal gegenüberliegende U-förmige Halter 56 auf. Um 90° dazu versetzt weist die Haltekappe 36 weiterhin zwei diagonal gegenüberliegende Befestigungselemente 58 in Form von Stiften auf, um den Lüfter 26 verliersicher am Halteabschnitt 50 zu befestigen. Dabei ist der Lüfter 26 vom Halteabschnitt 50 beabstandet angeordnet. Die U-förmigen Halter 56 weisen dabei an ihrer Oberseite 57 nicht gezeigte Rastnasen auf, die im eingebauten Zustand in komplementäre Aussparungen im Lüfter 26 eingreifen. Die U-förmigen Halter 56 umfassen bzw. bestehen aus einem formfesten aber elastischen Material. Dabei kann es sich beispielsweise um ein Elastomer, wie beispielsweise TPE, EPDM oder Silikon, handeln. Die Halter 56 sind damit weich aber formstabil. Dadurch können sie elastisch verformt werden, um die jeweilige Oberseite 57 zur Anordnung des Lüfters 26 auseinander zu biegen. Nach der Anordnung des Lüfters 26 liegen die Oberseiten 57 insbesondere unverformt am Lüfter 26 an, wobei die Rastnasen den Lüfter 26 verliersicher halten. Zusätzlich oder alternativ können auch die Befestigungsmittel 58 aus formfestem aber elastischem Material bestehen bzw. ein solches Material umfassen.

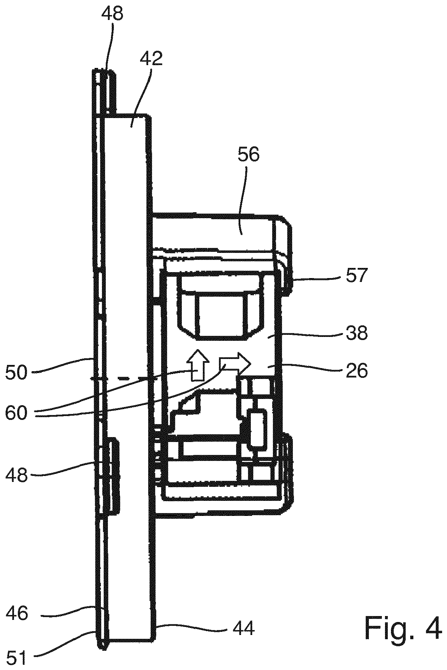

Wenn die Haltekappe 36 am Gehäuse 14 angeordnet ist, ragt der Lüfter 26 durch den Übergangsabschnitt 42 und die Öffnung 22 hindurch in das Innere des Gehäuses 14 und erzeugt, wie in Figur 4 durch die Pfeile 60 angedeutet, einen Kühlluftstrom im Inneren des Gehäuses 14 (durch eine Luftaustrittsöffnung 41 im Lüfterrahmen 38 hindurch, vgl. Figur 2), um das Lichtmodul 12 zu kühlen. Dabei wird Luft im Inneren des Gehäuses 14 umgewälzt.

Insgesamt ist die Funktionsweise des Scheinwerfers 10 wie folgt:
Im Betrieb des Lüfters 26 wird der Rotor 40 rotiert, um Luft im Inneren des Gehäuses 14 umzuwälzen, sodass ein Kühlluftstrom erzeugt werden kann. Dieser dient zur Kühlung des Lichtmoduls 12, insbesondere des Kühlkörpers 19. Beim Betreiben des Lüfters 26 können mechanische Schwingungen auftreten. Treten derartige Schwingungen auf, so werden diese nicht oder lediglich mit verringerter Schwingungsamplitude auf das Gehäuse 14 übertragen. Dabei trägt der Aufbau der Haltekappe 36 insgesamt zur Dämpfung bei, so dass mechanische Schwingungsenergie, insbesondere durch eine elastische Verformung, in insbesondere Wärmeenergie umgewandelt wird. Diese dämpfende Eigenschaft kann zum einen durch eine geeignete Werkstoffauswahl erzielt werden. Dabei kann die Haltekappe 36 insgesamt oder abschnittsweise aus einem Werkstoff mit gegenüber dem Gehäuse 14 verringerter Steifigkeit bzw. Härte aufgebaut sein. Geeignet wäre beispielsweise Schaumstoff, insbesondere Hartschaumstoff, oder ein Elastomer, wie beispielsweise TDE, EPDM oder Silikon. Denkbar wäre auch, dass sämtliche oder jedenfalls einige aneinander angrenzende Bauteilkomponenten aus unterschiedlichen Werkstoffen aufgebaut sind. Es hat sich herausgestellt, dass dies zur Schwingungsdämpfung positiv beitragen kann. Insbesondere die Ausbildung der Befestigungsmittel 56 und/oder 58 aus formfestem aber elastischem Material, beispielsweise einem Elastomer, wie beispielsweise TDE, EPDM oder Silikon, ermöglicht eine positive Schwingungsdämpfung.

Weiterhin trägt die strukturelle Ausgestaltung, insbesondere die geometrische Form, zur Schwingungsdämpfung bei. Insbesondere die die Beabstandung des Lüfters 26 zum Befestigungsabschnitt 42 kann eine Reduktion der Schwingungsamplituden, die insbesondere im Lüfter 26 erzeugt werden können, bewirken.

Insgesamt kann erfindungsgemäß eine mechanische Entkopplung zwischen Gehäuse 14 und Lüfter 26 bereitgestellt werden. Insbesondere können Schallübertragungen vom Lüfter 26 über das Gehäuse 14 in das Fahrzeug(innere) jedenfalls verringert werden. Weiterhin kann die mechanische Belastung durch Schwingungen reduziert werden, so dass eine mechanische Beschädigung in Form von Abrieb und/oder mechanischem Spiel reduziert ist. Somit kann zum einen eine Geräuschreduktion und zum anderen eine Verschleißreduktion bereitgestellt werden.

## Patentansprüche

1. Kraftfahrzeugscheinwerfer (10) mit einem Gehäuse (14) und einer Gehäuseöffnung (22), wobei eine die Gehäuseöffnung (22) abdeckende Haltekappe (36) vorgesehen ist, wobei die Haltekappe (36) einen Halteabschnitt (50), an dem ein elektrisch angetriebener Lüfter (26) befestigt ist, aufweist, wobei die Haltekappe (36) einen kreiszylindrischen Übergangsabschnitt (42) aufweist, der rohrförmig ausgebildet ist und der ein umlaufendes, dem Gehäuse (14) zugewandtes Ende (44) und ein umlaufendes, dem Gehäuse (14) abgewandtes Ende (46) aufweist, **dadurch gekennzeichnet, dass** drei zueinander versetzte Flanschabschnitte (48) vorgesehen sind, die in radialer Richtung vom Übergangsabschnitt (42) ab ragen und die eine Öffnung aufweisen, um die Haltekappe (36) zusammen mit dem Lüfter (26) an einem Befestigungsabschnitt (23) des Gehäuses (14) zu befestigen, wobei der Halteabschnitt (50) als ein plattenförmiger Halteabschnitt ausgebildet ist, welcher auf der dem Gehäuse (14) abgewandten Seite befestigt ist und die Haltekappe (36) nach außen verschließt, wobei der Lüfter (26) durch die Gehäuseöffnung (22) in einen Innenraum des Gehäuses (14) geführt ist, wobei die Haltekappe (36) und der Befestigungsabschnitt (23) des Gehäuses (14), an dem die Haltekappe (36) befestigt ist, durch ihre Materialzusammensetzung und durch ihre strukturelle Ausbildung dazu eingerichtet sind, eine Übertragung mechanischer Schwingungen zwischen dem Lüfter (26) und dem Gehäuse (14) zu dämpfen, wobei der Lüfter (26) einen Lüfterrahmen (38) aufweist, wobei die Haltekappe (36) Befestigungsmittel (56, 58) aufweist, und wobei der Lüfterrahmen (38) mit den Befestigungsmitteln (56, 58) am Halteabschnitt (50) so befestigt ist, dass der Lüfter (26) vom Halteabschnitt (50) beabstandet ist.

2. Kraftfahrzeugscheinwerfer (10) nach Anspruch 1, wobei die Haltekappe (36) und der Befestigungsabschnitt (23) des Gehäuses (14), an dem die Haltekappe (36) befestigt ist, jedenfalls abschnittsweise Materialien unterschiedlicher Steifigkeit aufweisen.

3. Kraftfahrzeugscheinwerfer (10) nach einem der vorhergehenden Ansprüche, wobei die Haltekappe (36) wenigstens abschnittsweise eine geringere Steifigkeit als der Befestigungsabschnitt (23) des Gehäuses (14), an dem die Haltekappe (36) befestigt ist, aufweist.

4. Kraftfahrzeugscheinwerfer (10) nach einem der vorhergehenden Ansprüche, wobei die Haltekappe (36) einen Übergangsabschnitt (42) zwischen den Flanschabschnitten (48) und dem Halteabschnitt (50) umfasst.

5. Kraftfahrzeugscheinwerfer (10) nach Anspruch 4, **dadurch gekennzeichnet, dass** der Übergangsabschnitt (42) und der Halteabschnitt (50) und/oder der Übergangsabschnitt (42) und der Flanschabschnitt (48) wenigstens abschnittsweise eine unterschiedliche Steifigkeit aufweisen.

6. Kraftfahrzeugscheinwerfer (10) nach einem der vorhergehenden Ansprüche 4 bis 6, wobei der Übergangsabschnitt (42) zylindrisch ausgebildet ist, wobei der Halteabschnitt (50) an einem der Öffnung (22) abgewandten Ende (46) des Übergangsabschnitts (42) angeordnet ist.

7. Kraftfahrzeugscheinwerfer (10) nach einem der vorhergehenden Ansprüche, wobei die Haltekappe (36) jedenfalls abschnittsweise aus einem formfesten, elastischen Material, insbesondere aus einem Elastomer, besteht.

8. Kraftfahrzeugscheinwerfer (10) nach den Ansprüchen 6 und 8, wobei die Befestigungsmittel (56, 58) aus dem formfesten, elastischen Material, insbesondere aus einem Elastomer, bestehen.

9. Kraftfahrzeugscheinwerfer (10) nach einem der vorhergehenden Ansprüche 4 bis 9, wobei der Flanschabschnitt (48) an einem der Öffnung (22) abgewandten Endbereich des Übergangsabschnitts (42) vorgesehen ist.

10. Kraftfahrzeugscheinwerfer (10) nach einem der vorhergehenden Ansprüche, wobei die Gehäuseöffnung (22) auf einer Lichtaustrittsöffnung des Gehäuses (14) abgewandten Rückseite des Gehäuses (14) vorgesehen ist.

11. Kraftfahrzeugscheinwerfer (10) nach einem der vorhergehenden Ansprüche 4 bis 11, wobei der Übergangsabschnitt (42) dicht an der Gehäuseöffnung (22) anliegt.

## Claims

1. Motor vehicle headlight (10) comprising a housing (14) and a housing opening (22), a holding cap (36) that covers the housing opening (22) being provided, the holding cap (36) having a holding portion (50) to which an electrically driven fan (26) is fastened, the holding cap (36) having a circular cylindrical transition portion (42) which is tubular and has a circumferential end (44) facing the housing (14) and a circumferential end (46) facing away from the housing (14), **characterized in that** three mutually offset flange portions (48) are provided which project from the transition portion (42) in the radial direction and have an opening in order to fasten the holding cap (36), together with the fan (26), to a fastening portion (23) of the housing (14), the holding portion (50) being designed as a planar holding portion which is fastened to the side facing away from the housing (14) and closes the holding cap (36) to the outside, the fan (26) being guided through the housing opening (22) into an interior of the housing (14), the holding cap (36) and the fastening portion (23) of the housing (14) to which the holding cap (36) is fastened being configured, by the material composition and structural design thereof, to dampen a transfer of mechanical vibrations between the fan (26) and the housing (14), the fan (26) having a fan frame (38), the holding cap (36) having fastening means (56, 58), and the fan frame (38) being fastened to the holding portion (50) by means of the fastening means (56, 58) in such a way that the fan (26) is spaced apart from the holding portion (50).

2. Motor vehicle headlight (10) according to claim 1, wherein the holding cap (36) and the fastening portion (23) of the housing (14) on which the holding cap (36) is fastened comprise, in portions, materials of different stiffness.

3. Motor vehicle headlight (10) according to either of the preceding claims, wherein the holding cap (36) has, at least in portions, a lower stiffness than the fastening portion (23) of the housing (14) on which the holding cap (36) is fastened.

4. Motor vehicle headlight (10) according to any of the preceding claims, wherein the holding cap (36) comprises a transition portion (42) between the flange portions (48) and the holding portion (50).

5. Motor vehicle headlight (10) according to claim 4, **characterized in that** the transition portion (42) and the holding portion (50) and/or the transition portion (42) and the flange portion (48) have a different stiffness at least in portions.

6. Motor vehicle headlight (10) according to any of the preceding claims 4 to 6, wherein the transition portion (42) is cylindrical, wherein the holding portion (50) is arranged on an end (46) of the transition portion (42) that faces away from the opening (22).

7. Motor vehicle headlight (10) according to any of the preceding claims, wherein the holding cap (36) in any case consists, in portions, of a dimensionally stable, elastic material, in particular of an elastomer.

8. Motor vehicle headlight (10) according to claims 6 and 8, wherein the fastening means (56, 58) consist of the dimensionally stable, elastic material, in particular of an elastomer.

9. Motor vehicle headlight (10) according to any of the preceding claims 4 to 9, wherein the flange portion (48) is provided on an end region of the transition portion (42) that faces away from the opening (22).

10. Motor vehicle headlight (10) according to any of the preceding claims, wherein the housing opening (22) is provided on a rear side of the housing (14) that faces away from a light exit opening of the housing (14).

11. Motor vehicle headlight (10) according to any of the preceding claims 4 to 11, wherein the transition portion (42) rests tightly against the housing opening (22) .

## Revendications

1. Phare de véhicule automobile (10) comprenant un boîtier (14) et une ouverture de boîtier (22), dans lequel un capuchon de retenue (36) recouvrant l'ouverture de boîtier (22) est prévu, dans lequel ledit capuchon de retenue (36) présente une section de retenue (50) sur laquelle est fixé un ventilateur (26) actionné électriquement, dans lequel le capuchon de retenue (36) présente une section de transition circulaire-cylindrique (42) qui est conçue de façon tubulaire et qui comprend une extrémité périphérique (44) tournée vers le boîtier (14) et une extrémité périphérique (46) montrant dans la direction opposée au boîtier (14), **caractérisé par le fait que** trois sections de bride (48) décalées les unes par rapport aux autres sont prévues qui font saillie de la section de transition (42) dans la direction radiale et qui présentent une ouverture afin de fixer le capuchon de retenue (36) conjointement avec le ventilateur (26) sur une section de fixation (23) du boîtier (14), dans lequel la section de retenue (50) est conçue en tant que section de retenue en forme de plaque qui est fixée sur le côté (14) montrant dans la direction opposée au boîtier (14) et ferme vers l'extérieur le capuchon de retenue (36), dans lequel le ventilateur (26) est guidé à travers l'ouverture de boîtier (22) dans un intérieur du boîtier (14), le capuchon de retenue (36) et la section de fixation (23) du boîtier (14) sur laquelle est fixé le capuchon de retenue (36) étant conçus par leur composition de matière et par leur conception structurelle pour amortir une transmission de vibrations mécaniques entre le ventilateur (26) et le boîtier (14), dans lequel le ventilateur (26) comprend un cadre de ventilateur (38), dans lequel le capuchon de retenue (36) présente des moyens de fixation (56, 58), et dans lequel le cadre de ventilateur (38) est fixé par les moyens de fixation (56, 58) à la section de retenue (50) de telle manière que le ventilateur (26) est espacé de la section de retenue (50).

2. Phare de véhicule automobile (10) selon la revendication 1, dans lequel le capuchon de retenue (36) et la section de fixation (23) du boîtier (14) sur laquelle est fixé le capuchon de retenue (36) présentent, en tout cas par sections, des matériaux de rigidité différente.

3. Phare de véhicule automobile (10) selon l'une quelconque des revendications précédentes, dans lequel le capuchon de retenue (36) présente au moins par sections une rigidité inférieure à celle de la section de fixation (23) du boîtier (14) sur laquelle est fixé le capuchon de retenue (36).

4. Phare de véhicule automobile (10) selon l'une quelconque des revendications précédentes, dans lequel le capuchon de retenue (36) comprend une section de transition (42) entre les sections de bride (48) et la section de retenue (50).

5. Phare de véhicule automobile (10) selon la revendication 4, **caractérisé par le fait que** la section de transition (42) et la section de retenue (50) et/ou la section de transition (42) et la section de bride (48) présentent au moins par sections une rigidité différente.

6. Phare de véhicule automobile (10) selon l'une quelconque des revendications précédentes 4 à 6, dans lequel la section de transition (42) est conçue de façon cylindrique, dans lequel la section de retenue (50) est disposée à une extrémité (46) de la section de transition (42), qui montre dans la direction opposée à l'ouverture (22).

7. Phare de véhicule automobile (10) selon l'une quelconque des revendications précédentes, dans lequel le capuchon de retenue (36) est fait, en tout cas par sections, d'un matériau élastique indéformable, en particulier d'un élastomère.

8. Phare de véhicule automobile (10) selon les revendications 6 et 8, dans lequel les moyens de fixation (56, 58) sont faits du matériau élastique indéformable, en particulier d'un élastomère.

9. Phare de véhicule automobile (10) selon l'une quelconque des revendications précédentes 4 à 9, dans lequel la section de bride (48) est prévue sur une zone d'extrémité de la section de transition (42), qui montre dans la direction opposée à l'ouverture (22).

10. Phare de véhicule automobile (10) selon l'une quelconque des revendications précédentes, dans lequel l'ouverture de boîtier (22) est prévue sur une face arrière du boîtier (14), qui montre dans la direction opposée à une ouverture de sortie de lumière du boîtier (14) .

11. Phare de véhicule automobile (10) selon l'une quelconque des revendications précédentes 4 à 11, dans lequel la section de transition (42) s'appuie de manière étanche contre l'ouverture de boîtier (22).
